# EUROPEAN PATENT SPECIFICATION

(11) **EP 4 320 458 B1**
(45) Date of publication and mention of the grant of the patent: **07.10.2026**
(21) Application number: 22733730.0
(22) Date of filing: 31.05.2022
(51) Int. Cl.: G01S 7/35, G01S 7/40, G01S 13/42, G01S 13/02

(54) **METHOD FOR RECOVERING THE DIGITAL ERROR OF A DIGITAL ARRAY ANTENNA AFTER POWERING IT OFF/ON AGAIN**
VERFAHREN ZUR WIEDERHERSTELLUNG DES DIGITALEN FEHLERS EINER DIGITALEN GRUPPENANTENNE NACH DEM AUSSCHALTEN/ANSCHALTEN
PROCÉDÉ DESTINÉ À LA RÉCUPÉRATION DE L'ERREUR NUMÉRIQUE D'UNE ANTENNE RÉSEAU NUMÉRIQUE APRÈS SA MISE HORS VOLTAGE/MISE SOUS VOLTAGE

(30) Priority: 17.06.2021 EP 21425030; 24.05.2022 IT 202200010826
(43) Date of publication of application: 14.02.2024
(73) Proprietor: Leonardo S.p.a., 00195 Roma (IT)
(72) Inventor: PETRUCCI, Roberto, 00071 Pomezia (RM) (IT); DI LORENZO, Benedetta, 00071 Pomezia (RM) (IT); DE IULIIS, Fabio, 00071 Pomezia (RM) (IT); CIOCIOLA, Antonio, 00071 Pomezia (RM) (IT); INFANTE, Leopoldo, 00071 Pomezia (RM) (IT); ROSSI, Paolo, 00071 Pomezia (RM) (IT); FEUDO, Fabio, 00071 Pomezia (RM) (IT); RICCIARDELLA, Nicholas, 00071 Pomezia (RM) (IT); TROMBETTA, Luigi, 00071 Pomezia (RM) (IT)
(74) Representative: Studio Torta S.p.A.
(86) International application number: PCT/IB2022/055070
(87) International publication number: WO 2022/263960

(56) References cited:
- CN-A- 112 731 315
- FENG RUOYU ET AL: "MIMO-monopulse target localisation for automotive radar", IET RADAR SONAR NAVIGATION, THE INSTITUTION OF ENGINEERING AND TECHNOLOGY, UK, vol. 12, no. 10, 1 October 2018 (2018-10-01), pages 1131 - 1136, XP006069595, ISSN: 1751-8784, DOI: 10.1049/IET-RSN.2018.5013
- GALINA BABUR ET AL: "SIMPLE CALIBRATION TECHNIQUE FOR PHASED ARRAY RADAR SYSTEMS", PROGRESS IN ELECTROMAGNETICS RESEARCH M, vol. 55, 1 January 2017 (2017-01-01), pages 109 - 119, XP055644836, DOI: 10.2528/PIERM16101203

## Description

### Cross-Reference to Related Applications

This Patent Application claims priority from European Patent Application No. 21425030.0 filed on June 17, 2021 and from Italian Patent Application No. 102022000010826 filed on May 24, 2022.

### Technical field of the invention

The present invention relates to a method for recovering the digital error of a digital array antenna after powering it off/on again and a corresponding digital array antenna. In particular, the present invention finds advantageous, but not exclusive application in a full digital array radar, (Full DAR), to which the following description will make explicit reference without thereby losing generality.

### State of the art

As is well known, a digital array antenna of a Full DAR comprises a plurality of radiating elements arranged in an array, a plurality of transmitting/receiving modules, which are adapted to operate at a plurality of radio frequencies and each of which is connected to a respective radiating element, a signal generation and conversion module for generating baseband signals and converting to and from radio frequency, a processor, which is adapted to control the signal generation and conversion module, a clock generator, which provides a reference clock to the processor, to the signal generation and conversion module and to the transmitting/receiving modules.

The signal generation and conversion module comprises a baseband or intermediate band section and a conversion section for converting signals to and from radio frequency. Each transmitting/receiving module comprises a transmitting branch and a receiving branch both of which are connected between the relative radiating element and the signal generation and conversion module.

In particular, the signal generation and conversion module is of the digital type, e.g. comprising a suitably configured FPGA module, the transmitting branch of the transmitting/receiving module comprises a digital-to-analogue converter (DAC) interfaced with the signal generation and conversion module and a high-power amplifier (HPA) connected between the digital-to-analogue converter and the radiating element, and the receiving branch comprises a low-noise amplifier (LNA) connected with the radiating element and an analogue-to-digital converter (ADC) connected between the low-noise amplifier and the signal generation and conversion module. The DAC and ADC converters of the transmitting/receiving modules, as well as the signal generation and conversion module, sample the reference clock in order to maintain synchronism between them and the processor.

Before it can be used, a digital array antenna must be calibrated in order to generate an equiphase plane on the antenna regardless of the radio frequency transmitted by the antenna to produce a certain radiation pattern and enable pointing thereof. Calibration serves to compensate for all electromagnetic and digital differences between the different transmitting/receiving modules and the radiating elements, e.g. slight physical imperfections of the different radiating elements, as well as different delays due to different signal feed paths between the signal generation and conversion module and the radiating elements. Calibration basically consists of determining the signal phases to be applied to the radiating elements for each of the radio frequencies used by the digital array antenna. The determined phases are set on the signal generation and conversion module. Calibration has a high execution time as the frequencies of a Full DAR to be measured can be of the order of one hundred.

When the digital array antenna is powered off and on again, all the transmitting/receiving modules sample the reference clock again, and it is highly probable that some transmitting/receiving module delays or anticipates the sampling, thus producing a time translation of some clock period for some antenna elements that causes the equiphase plane condition to be lost. In other words, clock metastability produces digital errors that corrupt antenna performance. Therefore, after each powering off/on again, the digital array antenna must be calibrated at all radio frequencies again before becoming operational again, resulting in a considerable loss of time. This is highly undesirable for a Full DAR that often finds itself operating in critical environments where maximum efficiency is required.

Chinese patent application No. CN112731315A discloses a rapid amplitude-phase calibration system and method for large-array-plane digital array radar. The system comprises a control module, a calibration module, an internal calibration network, a digital TR assembly and an optical communication network. The control module communicates with the calibration module and the digital TR assembly through optical fibers and is used for calibration control, signal coding and calibration data acquisition. The calibration module is used for opening a receiving channel, receiving a calibration signal transmitted by the array plane TR assembly, generating a sampling trigger to carry out data sampling and reporting sampling data to the control module according to a protocol when the system carries out transmission calibration. When the system carries out receiving calibration, a transmitting calibration signal is generated and output according to a code and a control signal transmitted by the control module. The internal calibration network comprises a radio frequency cable network and a power divider, and is used for connecting the radio frequency channel of the calibration module with the radio frequency channel of each digital TR assembly on the array plane for internal calibration test of the system. When the number of array plane channels is relatively large, the power-on preparation time of equipment can be remarkably reduced.

### Subject and Summary of the Invention

Aim of the present invention is to provide a method that allows quickly recalibrating a digital array antenna and which, at the same time, is easy and inexpensive to implement.

In accordance with the present invention there are provided a method for recovering the digital error of a digital array antenna, in particular for a digital array radar, after powering off/on again and a digital array antenna, in particular for a digital array radar, as defined in the appended claims.

### Brief description of the Drawings

Figure 1 shows a simplified block diagram of a digital array antenna implementing the method of the present invention for recovering the digital error of a digital array antenna after powering it off/on again.
Figure 2 shows a block diagram of a transmitting/receiving module of the digital array antenna of Figure 1 during a particular operating phase of the method of the invention.
Figure 3 is a concise flow chart showing the main phases of the method of the present invention

### Detailed Description of Preferred Embodiments of the Invention

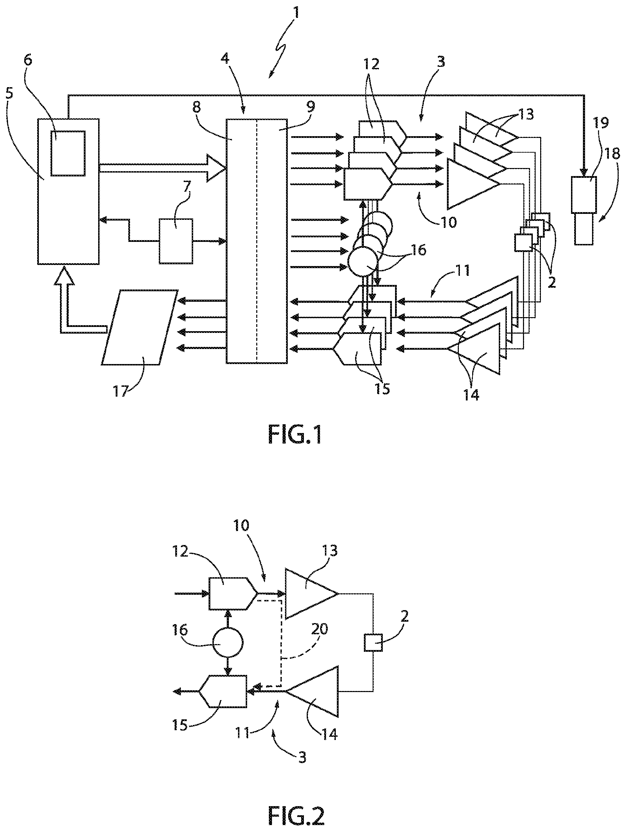

In Figure 1, 1 generically denotes as a whole a digital array antenna, in particular for a digital radar, e.g. a full DAR. The antenna 1 comprises a plurality of radiating elements 2, a corresponding plurality of transmitting/receiving modules 3, which are adapted to operate at a plurality of radio frequencies and each of which is connected to a respective radiating element 2, a signal generation and conversion module 4 for generating baseband or intermediate band signals and converting to and from radio frequency, a processor 5, which comprises a non-volatile memory 6 and is adapted to control the signal generation and conversion module 4, and a clock generator 7, which provides a reference clock to the processor 5, to the signal generation and conversion module 4 and to the transmitting/receiving modules 3.

For the sake of ease of description, Nf will hereafter denote the number of the aforesaid radio frequencies and Nk will denote the number of radiating elements. The number of radio frequencies Nf is in the order of a hundred.

The signal generation and conversion module 4 comprises a base or intermediate band section 8 and a conversion section 9 for converting signals to and from radio frequency. Each transmitting/receiving module 3 comprises a transmitting branch 10 and a receiving branch 11 both of which are connected between the relative radiating element 2 and the signal generation and conversion module 4.

In particular, the signal generation and conversion module 4 is of the digital type, for example it comprises a suitably configured FPGA module. The transmitting branch 10 of each transmitting/receiving module 3 comprises, connected in cascade towards the relative radiating element 2, a digital-to-analogue converter (DAC) 12 and a high-power amplifier (HPA) 13. The receiving branch 11 of each transmitting/receiving module 3 comprises, in cascade from the relative radiating element 2, a low-noise amplifier (LNA) 14 and an analogue-to-digital converter (ADC). Thus, each radiating element 2 is connected to the output of the relative HPA 13 and to the input of the relative LNA 14. In addition, each transmitting/receiving module 3 comprises a PLL circuit 16 for maintaining synchronism between the DAC 12 and the ADC 15.

The DACs 12 and the ADCs 15, through the relative PLL circuits 16, as well as the signal generation and conversion module 4, sample the reference clock so as to maintain synchronism between them and the processor 5.

The antenna 1 further comprises a digital beam forming network 17, which interfaces the signal generation and conversion module 4 to the processor 5 in the signal reception path and operates in a known manner.

The antenna 1 further comprises a calibration antenna 18, which is arranged in front of the radiating elements 2 so as to illuminate all of them, and comprises its own transmitting module 19 commanded by the processor 5 to perform some steps of the method of the invention, as will be explained in detail hereinafter.

The processor 5 is configured to implement the method of the invention to recover the digital error of the antenna 1 after powering the antenna 1 itself off/on again.

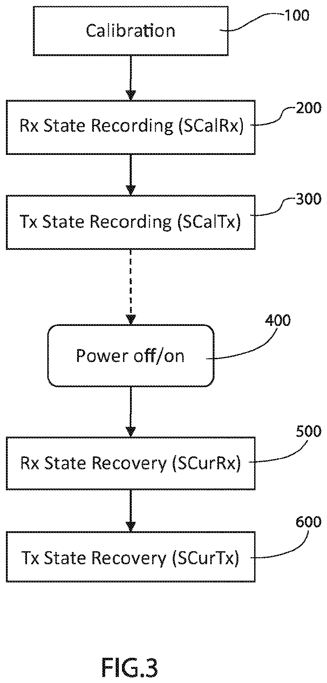

With reference to Figure 3, the method of the invention comprises a plurality of steps to be performed after the calibration of the antenna 1 (step 100), generally groupable into a phase of recording a reception state (step 200) and a phase of recording a transmission state (step 300), and a plurality of steps to be performed after powering off/on again the antenna 1 (step 400), generally groupable into a reception state recovery phase (step 500) and into a transmission state recovery phase (step 600).

In particular, the reception state recording phase (step 200) comprises, for each radio frequency of the plurality of radio frequencies and for each radiating element 2, the acquisition of a digital state SCalRx relative to said radio frequency in reception, and the recording, i.e. the storage, of the digital state SCalRx in the non-volatile memory 6. The digital state SCalRx comprises a delay and phase, with respect to the reference clock, associated with the radiating element 2 during reception at the specified radio frequency. Adopting an indexed representation, the digital state SCalRx(k,f) comprises the delay and the phase associated with the generic radiating element denoted by k, during reception at the generic radio frequency denoted by f.

In more detail, the acquisition of the digital state SCalRx involves transmitting, via the calibration antenna 18, a signal s(t) consisting of a chirp pulse having an unknown delay and phase, receiving the signal s(t) via each of the transmitting/receiving modules 3, and, for each of the radiating elements 2, obtaining a digital signal u(t) by performing a digital deramping or dechirping of the received signal s(t) and determining the delay and the phase associated with the radiating element 2 based on a digital processing of the signal u(t).

The signal s(t) can be expressed with the following formula: $s \left(t\right) = exp \left\{j⋅2π\left(\frac{B}{2 T}{\left(t-{t}_{0}\right)}^{2}-\frac{B}{2}\left(t-{t}_{0}\right)\right)\right\} ⋅ exp \left\{j⋅{φ}_{0}\right\} ,$ wherein, B is the instantaneous chirp band, T is the duration of the chirp pulse, t₀ is the unknown delay and φ₀ is the unknown phase.

The signal s(t) expressed by the formula above is in base or intermediate band and the calibration antenna 18 transmits the corresponding translated signal to the generic radio frequency used to determine the specific digital state.

Deramping the received signal s(t) consists of digitally multiplying the received signal s(t) by a signal d(t) consisting of a complex conjugate copy of the signal s(t), but with known delay and phase, e.g. zero: $d \left(t\right) = exp \left\{-j⋅2π\left(\frac{B}{2 T}{t}^{2}-\frac{B}{2}t\right)\right\} ,$ so as to obtain the signal u(t) expressed as follows: $u \left(t\right) = exp \left\{-j⋅2π\frac{B ⋅ {t}_{0}}{T}t\right\} ⋅ exp \left\{j⋅2π\frac{B}{2}\left({t}_{0}+\frac{{t}_{0}^{2}}{T}\right)\right\} ⋅ exp \left\{j⋅{φ}_{0}\right\} .$

Typically, the delays of the radiating elements 2 to be estimated by the method of the invention are of the order of a few periods of the reference clock, i.e. a few nanoseconds. On the other hand, the duration of the chirp pulse T is instead of a few microseconds. Therefore, it can be assumed that the delay t₀ is much lower than the pulse duration T, and consequently the signal u(t) can be approximated as follows: $u \left(t\right) ≅ exp \left\{-j⋅2π\frac{B ⋅ {t}_{0}}{T}t\right\} ⋅ exp \left\{j⋅2π\frac{B ⋅ {t}_{0}}{2}\right\} ⋅ exp \left\{j⋅{φ}_{0}\right\} .$

The signal u(t) thus obtained consists of a sinusoid expressed in digital form, the argument of which is a linear function of time (straight line): $φ \left(t\right) = - 2 π \frac{{Bt}_{0}}{T} t + {πBt}_{0} + {φ}_{0} .$

It is observed that the slope of the function φ(t) depends on the delay t₀ and that the initial value (intercept of ordinates) of the function φ(t) depends on the delay t₀ and on the phase φ₀. Furthermore, in the specific case of acquisition of the digital state SCalRx(k,f), t₀ and φ₀ would represent the delay and, respectively, the phase with respect to the reference clock associated with the radiating element k during reception at radio frequency f. For this reason, the determination of the delay and of the phase associated with the generic radiating element 2 includes the following digital processing of the signal u(t).

The digital signal φ(t) is obtained as the arcsine of the digital signal u(t). The slope and the initial value of the signal φ(t) are estimated by linear regression. The delay associated with the radiating element 2 is calculated as a function of the slope of the signal φ(t), of the instantaneous band B of the signal s(t) and of the duration T of the signal s(t). The phase associated with the radiating element 2 is calculated as a function of the initial value of the signal φ(t), of the delay calculated as above and of the instantaneous band B of the signal s(t).

The transmission state recording phase (step 300) comprises, for each radio frequency of the plurality of radio frequencies and for each radiating element 2, the acquisition of a digital state SCalTx relative to said radio frequency in transmission, and the recording of the digital state SCalTx in the non-volatile memory 6. The digital state SCalTx comprises a delay and a phase, with respect to the reference clock, associated with the radiating element 2 during transmission at the specified radio frequency. With an indexed representation, the digital state SCalTx(k,f) comprises the delay and the phase associated with the generic radiating element denoted by k, during reception at the generic radio frequency denoted by f.

The transmission state recording phase (step 300) differs from the reception state recording phase (step 200) in that in each transmitting/receiving module 3, the respective DAC 12 transmits the signal s(t) directly to the ADC 15. In other words, the DAC 12 is looped over the respective converter ADC 15 so that the signal s(t) transmitted by the DAC 12 is received directly by the ADC 15.

With particular reference to Figure 2, each transmitting/receiving module 3 comprises a by-pass connection 20 that can be activated by the processor 5 to connect the output of the DAC 12 directly to the input of the ADC 15 for the purpose of by-passing the entire analogue part of the transmitting/receiving module 3, i.e. the two amplifiers HPA 13 and LNA 14 and the radiating element 2.

The signal s(t) is in base or intermediate band and the signal generation and conversion module 4 generates the corresponding translated signal to the radio frequency used, to be applied to the input of the DAC 12.

The reception state recovery phase (step 500) comprises, for a test radio frequency selected from the plurality of radio frequencies and for each radiating element 2, acquiring a digital state SCurRx relative to the test radio frequency in reception and comparing the digital state SCurRx with the digital state SCalRx relative to the test radio frequency to determine a time offset ΔtRx and a phase shift ΔφRx that are associated with the radiating element 2 in reception.

The acquisition of the digital state SCurRx relative to the test radio frequency is performed in the same manner as the acquisition of the digital state SCalRx for a generic radio frequency, described above in relation to the phase of recording a reception state (step 200), i.e. using the calibration antenna 18 to transmit the signal s(t) translated to the test radio frequency.

By adopting an indexed representation, the digital state SCurRx (k) comprises the delay and the phase that are associated with the generic radiating element denoted by k. Thus, for each radiating element denoted by k, the digital state SCurRx(k) is compared with the digital state SCalRx (k,f1) at the test radio frequency denoted by f1.

In particular, the delay t_{Cur} and the phase φ_{Cur} of the digital state SCurRx(k) are compared with the delay t_{Cal} and the phase φ_{Cal} of the digital state SCalRx(k,f1), respectively. In more detail, said comparison involves calculating a first time difference among the delays t_{Cur} and t_{Cal} and determining the time offset ΔtRx by rounding the first time difference to an integer number of reference clock periods, according to the following formula: $Δ tRx = \frac{round \left(\left({t}_{Cur}-{t}_{Cal}\right)⋅{f}_{ck}\right)}{{f}_{ck}}$ wherein *f_{ck}* is the reference clock frequency and *round()* is the function of rounding to the nearest integer.

Furthermore, said comparison provides for calculating a first phase difference among the phases φ_{Cur} and φ_{Cal} and determining the phase shift ΔφRx by subtracting from the first phase difference the phase shift introduced by the time offset ΔtRx at the test radio frequency, according to the following formula: $Δ φRx = {φ}_{Cur} - {φ}_{Cal} - 2 ⋅ π ⋅ {f}_{RF} ⋅ Δ tRx$ wherein *f_{RF}* is the test radio frequency.

The reception state recovery phase ends with the reconfiguration of the signal generation and conversion module 4 so that the latter applies, to each transmitting/receiving module 3, the relative time offset ΔtRx and the relative phase shift ΔφRx in reception, regardless of the radio frequency of the plurality of radio frequencies that will subsequently be used by the antenna 1. Thus, the time offset ΔtRx and the phase shift ΔφRx of the radiating elements 2 are the compensation coefficients that allow the recovery of the digital states in reception recorded immediately after calibration of the antenna 1 and thus allow the substantial restoration of the equiphase plane condition on the antenna 1.

The transmission state recovery phase (step 600) comprises, for each radiating element 2, acquiring a digital state SCurTx relative to the test radio frequency in transmission and comparing the digital state SCurTx with the digital state SCalTx relative to the test radio frequency to determine a time offset ΔtTx and a phase shift ΔφTx that are associated with the radiating element 2 in transmission. By adopting an indexed representation, the digital state SCurTx(k) comprises the delay and the phase that are associated with the generic radiating element denoted by k. Thus, for each radiating element denoted by k, the digital state SCurTx(k) is compared with the digital state SCalTx(k,f1) at the test radio frequency denoted by f1.

The transmission state recovery phase (step 600) differs from the reception state recovery phase (step 500) in that in each transmitting/receiving module 3, the respective converter DAC 12 transmits the signal s(t) directly to the converter ADC 15, i.e. in that the signal s(t) is transmitted like in the transmission state recording phase, but only for the test radio frequency.

The transmission state recovery phase (step 600) is performed after the reception state recovery phase, and thus the signal generation and conversion digital module 4 is already reconfigured to apply the time offsets ΔtRx and the phase shifts ΔφRx before the signal s(t) is transmitted by the DAC 12. This allows the digital error on the receiving branch 11 to be compensated so that it does not overlap with the digital error on the transmitting branch 10 when determining the digital state SCurTx.

Thus, the time offset ΔtTx and the phase shift ΔφTx are calculated using the following formulas: $Δ tTx = \frac{round \left(\left({t}_{Cur}-{t}_{Cal}\right)⋅{f}_{ck}\right)}{{f}_{ck}}$ $Δ φTx = {φ}_{Cur} - {φ}_{Cal} - 2 ⋅ π ⋅ {f}_{RF} ⋅ Δ tTx$ wherein t_{Cur} and φ_{Cur} are delay and phase of the digital state SCurTx(k) and t_{Cal} and φ_{Cal} are delay and phase of the digital state SCalTx(k,f1).

The transmission state recovery phase ends with the reconfiguration of the signal generation and conversion module 4 so that the latter applies, to each transmitting/receiving module 3, the relative time offset ΔtTx and the relative phase shift ΔφTx in transmission, regardless of the radio frequency of the plurality of radio frequencies that will subsequently be used by the antenna 1. Thus, the time offset ΔtTx and the phase shift ΔφTx of the radiating elements 2 are the compensation coefficients that allow the recovery of the digital states in transmission recorded immediately after calibration of the antenna 1 and thus allow the substantial restoration of the equiphase plane condition on the antenna 1.

It is noted that the test radio frequency used for the reception state recovery phase and the transmission state recovery phase is selected on the basis of the electromagnetic situation in which the antenna 1 is when powered on again. In particular, the test radio frequency must not be jammed by external systems.

The method described above for recovering the digital error of a digital array antenna after powering it off/on again drastically reduces the time required to compensate for the phase errors due to clock metastability, compared to a normal antenna calibration. In other words, the method of the invention requires only two measurements, a first one on the test radio frequency in reception and the second on the test radio frequency in transmission, as opposed to the 2*Nf measurements of a normal calibration.

In fact, after powering the antenna 1 on again, the current digital state in reception SCurRx and in transmission SCurTx for each radiating element is only acquired again for a single test radio frequency. The current digital state SCurRx and SCurTx is then compared with the recorded digital state SCalRx and SCalTx to determine the compensation coefficients, i.e. the time offsets ΔtRx and ΔtTx and the phase shifts ΔφRx and ΔφTx, which allow the phases of the radiating elements 2 to be corrected for any radio frequency. This is made possible by the fact that the digital state of a radiating element 2 does not change as the radio frequency used varies, so it is sufficient to determine the compensation coefficients for a single radio frequency.

The recording of the digital states of all radiating elements 2 is made for all the radio frequencies usable by antenna 1, as it is not possible to know in advance which test radio frequency will be usable for the recovery of the digital states. In fact, when powering the antenna 1 on again, it is necessary to select as test radio frequency one of the radio frequencies that are not disturbed by external systems at that moment.

## Claims

1. Method for recovering the digital error of a digital array antenna, in particular for a digital array radar, after powering off and on of the digital array antenna, the digital array antenna (1) comprising a plurality of radiating elements (2), a corresponding plurality of transmitting/receiving modules (3) adapted to operate at a plurality of radio frequencies, a signal generation and conversion digital module (4) for generating baseband or intermediate band signals and converting them to and from radio frequency, a processor (5) comprising a non-volatile memory (6) and adapted to control the signal generation and conversion digital module (4), and a reference clock generator (7) to provide a reference clock to the processor (5), to the signal generation and conversion module (4) and to the transmitting/receiving modules (3), each transmitting/receiving module (3) comprising a transmitting branch (10) and a receiving branch (11), both of which are connected between the relative radiating element (2) and the signal generation and conversion digital module (4), the transmitting branch (10) comprising in cascade towards the relative radiating element (2) a digital-to-analogue converter (12) and a first amplifier (13), and the receiving branch (11) comprising in cascade from the relative radiating element (2) a second amplifier (14) and an analogue-to-digital converter (15); the method comprising:
- immediately after a calibration of the digital array antenna (1), for each radio frequency of the plurality of radio frequencies and for each radiating element (2), acquiring a first digital state (SCalRx) relative to said radio frequency in reception and a second digital state (SCalTx) relative to said radio frequency in transmission, said first and second digital states (SCalRx, SCalTx) each comprising a delay and a phase, with respect to the reference clock, associated with the radiating element (2);
- recording said first and second digital states (SCalRx, SCalTx) in non-volatile memory (6) and the method being **characterised by**:
- after any powering off and on of the digital array antenna (1) occurring after the calibration thereof, for a single test radio frequency selected from the plurality of radio frequencies and for each radiating element (2), acquiring a third digital state (SCurRx) relative to the single test radio frequency in reception and a fourth digital state (SCurTx) relative to the single test radio frequency in transmission, said third and fourth digital states (SCurRx, SCurTx) each comprising a delay and a phase, with respect to the reference clock, associated with the radiating element (2);
- for each radiating element (2), comparing the third digital state (SCurRx) with the first digital state (SCalRx) relative to the single test radio frequency to determine a first time offset (ΔtRx) and a first phase shift (ΔφRx) and comparing the fourth digital state (SCurTx) with the second digital state (SCalTx) relative to the single test radio frequency to determine a second time offset (ΔtTx) and a second phase shift (ΔφTx); and
- configuring the signal generation and conversion digital module (4) so that the latter applies, to each transmitting/receiving module (3), the relative first time offset (ΔtRx) and first phase shift (ΔφRx) in reception and the relative second time offset (ΔtTx) and second phase shift (ΔφTx) in transmission;
both the acquisition of the first digital states (SCalRx) and the acquisition of the third digital states (SCurRx) comprising, for each radio frequency of the plurality of radio frequencies in case of acquisition of the first digital states (SCalRx) and for the single test radio frequency in case of acquisition of the second digital states (SCurRx):
- transmitting a radio signal, corresponding to a translation to the used radio frequency of a first signal (s(t)) consisting of a chirp pulse, via a calibration antenna (18), which comprises a respective transmitting module (19) controlled by the processor (5) and is arranged in front of the radiating elements (2);
- receiving the first signal (s(t)) via each transmitting/receiving module (3) and the signal generation and conversion digital module (4);
- for each radiating element (2), obtaining a digital second signal (u(t)) by performing a digital deramping of the received first signal (s(t)) and determining the delay and the phase associated with the radiating element (2) based on a digital processing of the digital second signal (u(t));
both the acquisition of the second digital states (SCalTx) and the acquisition of the fourth digital states (SCurTx) comprising, for each radio frequency of the plurality of radio frequencies in case of acquisition of the second digital states (SCalTx) and for the single test radio frequency in case of acquisition of the fourth digital states (SCurTx):
- in each transmitting/receiving module (3), transmitting a radio signal, which corresponds to a translation to the used radio frequency of a first signal (s(t)) consisting of a chirp pulse, from the digital-to-analogue converter (12) directly to the analogue-to-digital converter (15) so that the first signal s(t) is directly received via the transmitting/receiving module (3) and the signal generation and conversion digital module (4); and
- for each radiating element (2), obtaining a digital second signal (u(t)) by performing a digital deramping of the received first signal (s(t)) and determining the delay and the phase associated with the radiating element (2) based on a digital processing of the digital second signal (u(t)).

2. Method according to claim 1, wherein the acquisition of the fourth digital states (SCurTx) is performed after the comparison between the third digital states (ScurRx) with the first digital states (ScalRx) relative to the test radio frequency to determine the first time offset and the first phase shift for each radiating element (2), and the transmission of the first signal (s(t)) is carried out after configuring the signal generation and conversion digital module (4) so that the latter applies the relative first time offset (ΔtRx) and first phase shift (ΔφRx) in reception to each transmitting/receiving module (3).

3. Method according to claim 1, wherein performing a digital deramping of the first received signal (s(t)) comprises:
- digitally multiplying the received first signal (s(t)) by a third signal (d(t)) consisting of a complex conjugate copy of the first signal (s(t)) with known delay and phase, so as to obtain, as a second signal (u(t)), a signal that can be approximated to a sinusoid.

4. Method according to claim 3, wherein determining the delay and the phase associated with the radiating element (2) comprises:
- obtaining a digital fourth signal (φ(t)) as the arcsine of the second signal (u(t));
- estimating slope and initial value of the fourth signal (φ(t)) by linear regression;
- calculating the delay associated with the radiating element (2) as a function of the slope; and
- calculating the phase associated with the radiating element (2) as a function of the initial value.

5. Method according to any one of claims 1 to 4, wherein comparing the third digital state (SCurRx) with the first digital state (SCalRx) relative to the test radio frequency comprises:
- calculating a first time difference between the delay of the third digital state (SCurRx) and the delay of the first digital state (SCalRx); and
- determining the first time offset (ΔtRx) by rounding the first time difference to an integer number of reference clock periods;
and comparing the fourth digital state (SCurTx) with the second digital state (SCalTx) relative to the test radio frequency comprises:
- calculating a second time difference between the delay of the fourth digital state (SCurTx) and the delay of the second digital state (SCalTx); and
- determining the second time offset (ΔtTx) by rounding the second time difference to an integer number of reference clock periods.

6. Method according to claim 5, wherein comparing the third digital state (SCurRx) with the first digital state (SCalRx) relative to the test radio frequency comprises:
- calculating a first phase difference between the phase of the third digital state (SCurRx) and the phase of the first digital state (SCalRx);
- calculating the first phase shift (ΔφRx) by subtracting from the first phase difference the phase shift introduced by the first time offset (ΔtRx) at the test radio frequency;
and comparing the fourth digital state (SCurTx) with the second digital state (SCalTx) relative to the test radio frequency comprises:
- calculating a second phase difference between the phase of the fourth digital state (SCurTx) and the phase of the second digital state (SCalTx);
- calculating the second phase shift (ΔφTx) by subtracting from the second phase difference the phase shift introduced by the second time offset (ΔtTx) at the test radio frequency.

7. Method according to any one of the claims 1 to 6, wherein said single test radio frequency is selected among those radio frequencies of the plurality of radio frequencies which are not disturbed by external systems.

8. Digital array antenna, in particular for a digital array radar, comprising a plurality of radiating elements (2), a corresponding plurality of transmitting/receiving modules (3) adapted to operate at a plurality of radio frequencies, a signal generation and conversion digital module (4) for generating baseband signals and converting them to and from radio frequency, a calibration antenna (18) provided with a respective transmitting module (19), a processor (5), which comprises a non-volatile memory (6) and is adapted to control the signal generation and conversion digital module (4) and the transmitting module (19) of the calibration antenna (18), and a reference clock generator (7), which provides a reference clock to the processor (5), to the signal generation and conversion module (4) and to the transmitting/receiving modules (3); the transmitting/receiving modules (3) comprising a transmitting branch (10) and a receiving branch (11), both of which are connected between the relative radiating element (2) and the signal generation and conversion digital module (4), the transmitting branch (10) comprising in cascade towards the relative radiating element (2) a digital-to-analogue converter (12) and a first amplifier (13), and the receiving branch (11) comprising in cascade from the relative radiating element (2) a second amplifier (14) and an analogue-to-digital converter (15); the processor (5) being configured to implement the method according to any one of claims 1 to 7.

## Patentansprüche

1. Verfahren zur Wiederherstellung des digitalen Fehlers einer digitalen Gruppenantenne, insbesondere für ein digitales Gruppen-Radar, nach dem An- und Ausschalten der digitalen Gruppenantenne, wobei die digitale Gruppenantenne (1) eine Vielzahl von Strahlungselementen (2), eine entsprechende Vielzahl von Sende-/Empfangsmodulen (3), die für den Betrieb bei einer Vielzahl von Funkfrequenzen ausgelegt sind, ein digitales Modul zur Signalerzeugung und -umwandlung (4) zur Erzeugung von Basisband- oder Zwischenbandsignalen und deren Umwandlung zu und von Funkfrequenzen, einen Prozessor (5) umfassend einen nichtflüchtigen Speicher (6) und angepasst zur Steuerung des digitalen Moduls zur Signalerzeugung und -umwandlung (4) sowie einen Referenztaktgenerator (7) zur Bereitstellung eines Referenztakts für den Prozessor (5), für das Modul zur Signalerzeugung und -umwandlung (4) und für die Sende-/Empfangsmodule (3) umfasst, wobei jedes Sende-/Empfangsmodul (3) einen Sendeast (10) und einen Empfangsast (11) umfasst, die beide zwischen dem relativen Strahlungselement (2) und dem digitalen Modul zur Signalerzeugung und -umwandlung (4) verbunden sind, wobei der Sendeast (10) in Richtung des relativen Strahlungselements (2) einen Digital-zu-Analog-Wandler (12) und einen ersten Verstärker (13) in Kaskade umfasst, und der Empfangsast (11) in Kaskade vom relativen Strahlungselement (2) einen zweiten Verstärker (14) und einen Analog-zu-Digital-Wandler (15) umfasst; das Verfahren umfassend:
- Unmittelbar nach einer Kalibrierung der digitalen Gruppenantenne (1) für jede Funkfrequenz der Vielzahl von Funkfrequenzen und für jedes Strahlungselement (2) Erfassen eines ersten digitalen Zustands (SCalRx) in Bezug auf die genannte Funkfrequenz im Empfang und eines zweiten digitalen Zustands (SCalTx) in Bezug auf die genannte Funkfrequenz beim Senden, wobei der erste und der zweite digitale Zustand (SCalRx, SCalTx) jeweils eine Verzögerung und eine Phase in Bezug auf die Referenzuhr umfassen, die dem Strahlungselement (2) zugeordnet sind;
- Aufzeichnen der ersten und zweiten digitalen Zustände (SCalRx, SCalTx) im nichtflüchtigen Speicher (6) und wobei das Verfahren durch Folgendes gekennzeichnet ist:
- nach jedem An- und Ausschalten der digitalen Gruppenantenne (1), das nach deren Kalibrierung erfolgt, für eine einzelne Test-Funkfrequenz, die aus der Vielzahl von Funkfrequenzen ausgewählt wird, und für jedes Strahlungselement (2) das Erfassen eines dritten digitalen Zustands (SCurRx) in Bezug auf die einzelne Test-Funkfrequenz im Empfangsbetrieb und eines vierten digitalen Zustands (SCurTx) in Bezug auf die einzelne Test-Funkfrequenz beim Senden, wobei der dritte und der vierte digitale Zustand (SCurRx, SCurTx) jeweils eine Verzögerung und eine Phase in Bezug auf den Referenztakt umfassen, die dem Strahlungselement (2) zugeordnet sind;
- für jedes Strahlungselement (2), Vergleichen des dritten digitalen Zustands (SCurRx) mit dem ersten digitalen Zustand (SCalRx) in Bezug auf die einzelne Testfunkfrequenz, um einen ersten Zeitversatz (ΔtRx) und eine erste Phasenverschiebung (ΔφRx) zu bestimmen, und Vergleichen des vierten digitalen Zustands (SCurTx) mit dem zweiten digitalen Zustand (SCalTx) in Bezug auf die einzelne Testfunkfrequenz, um einen zweiten Zeitversatz (ΔtTx) und eine zweite Phasenverschiebung (ΔφTx) zu bestimmen; und
- Konfigurieren des digitalen Moduls zur Signalerzeugung und -umwandlung (4) derart, dass dieses jedem Sende-/Empfangsmodul (3) beim Empfang den relativen ersten Zeitversatz (ΔtRx) und die relative erste Phasenverschiebung (ΔφRx) sowie beim Senden den relativen zweiten Zeitversatz (ΔtTx) und die relative zweite Phasenverschiebung (ΔφTx) zuführt;
wobei sowohl die Erfassung der ersten digitalen Zustände (SCalRx) als auch die Erfassung der dritten digitalen Zustände (SCurRx) für jede der mehreren Funkfrequenzen im Falle der Erfassung der ersten digitalen Zustände (SCalRx) und für die einzelne Testfunkfrequenz im Falle der Erfassung der dritten digitalen Zustände (SCurRx) umfassen:
- Senden eines Funksignals, das einer Umwandlung eines aus einem Chirp-Impuls bestehenden ersten Signals (s(t)) auf die verwendete Funkfrequenz entspricht, über eine Kalibrierungsantenne (18), die ein vom Prozessor (5) gesteuertes Sendemodul (19) umfasst und vor den Strahlungselementen (2) angeordnet ist;
- Empfangen des ersten Signals (s(t)) über jedes Sende-/Empfangsmodul (3) und das digitale Modul zur Signalerzeugung und -umwandlung (4);
- für jedes Strahlungselement (2), Erzeugen eines digitalen zweiten Signals (u(t)) durch digitale Entflankung des empfangenen ersten Signals (s(t)) und Bestimmen der mit dem Strahlungselement (2) verbundenen Verzögerung und Phase auf der Grundlage einer digitalen Verarbeitung des digitalen zweiten Signals (u(t));
wobei sowohl die Erfassung der zweiten digitalen Zustände (SCalTx) als auch die Erfassung der vierten digitalen Zustände (SCurTx) für jede der mehreren Funkfrequenzen im Falle der Erfassung der zweiten digitalen Zustände (SCalTx) und für die einzelne Testfunkfrequenz im Falle der Erfassung der vierten digitalen Zustände (SCurTx) umfassen:
- in jedem Sende-/Empfangsmodul (3), Senden eines Funksignals, das einer Umwandlung eines aus einem Chirp-Impuls bestehenden ersten Signals (s(t)) auf die verwendete Funkfrequenz entspricht, vom Digital-zu-Analog-Wandler (12) direkt an den Analog-zu-Digital-Wandler (15), so dass das erste Signal s(t) direkt über das Sende-/Empfangsmodul (3) und das digitale Modul zur Signalerzeugung und -umwandlung (4) empfangen wird; und
- für jedes Strahlungselement (2), Erzeugen eines digitalen zweiten Signals (u(t)) durch digitale Entflankung des empfangenen ersten Signals (s(t)) und Bestimmen der mit dem Strahlungselement (2) verbundenen Verzögerung und Phase auf der Grundlage einer digitalen Verarbeitung des digitalen zweiten Signals (u(t)).

2. Verfahren nach Anspruch 1, wobei die Erfassung der vierten digitalen Zustände (SCurTx) nach dem Vergleich der dritten digitalen Zustände (ScurRx) mit den ersten digitalen Zuständen (ScalRx) in Bezug auf die Test-Hochfrequenz erfolgt, um den ersten Zeitversatz und die erste Phasenverschiebung für jedes Strahlungselement (2) zu bestimmen, und die Sendung des ersten Signals (s(t)) nach der Konfiguration des digitalen Moduls zur Signalerzeugung und -umwandlung (4) erfolgt, so dass dieses den relativen ersten Zeitversatz (ΔtRx) und die erste Phasenverschiebung (ΔφRx) beim Empfang auf jedes Sende-/Empfangsmodul (3) anwendet.

3. Verfahren nach Anspruch 1, wobei das Durchführen einer digitalen Abflachung des ersten empfangenen Signals (s(t)) umfasst:
- digitales Multiplizieren des empfangenen ersten Signals (s(t)) mit einem dritten Signal (d(t)), das aus einer komplex konjugierten Kopie des ersten Signals (s(t)) mit bekannter Verzögerung und bekannter Phase besteht, um als zweites Signal (u(t)) ein Signal zu erhalten, das einer Sinuskurve angenähert werden kann.

4. Verfahren nach Anspruch 3, wobei das Bestimmen der Verzögerung und der Phase, die mit dem Strahlungselement (2) verbunden sind, umfasst:
- Erzeugen eines digitalen vierten Signals (φ(t)) als Arkussinus des zweiten Signals (u(t));
- Schätzen der Steigung und des Anfangswerts des vierten Signals (φ(t)) mittels linearer Regression;
- Berechnen der mit dem Strahlungselement (2) verbundenen Verzögerung als Funktion der Steigung; und
- Berechnen der mit dem Strahlungselement (2) verbundenen Phase als Funktion des Anfangswerts.

5. Verfahren nach einem der Ansprüche 1 bis 4, wobei das Vergleichen des dritten digitalen Zustands (SCurRx) mit dem ersten digitalen Zustand (SCalRx) relativ zu der Testfunkfrequenz umfasst:
- Berechnen einer ersten Zeitdifferenz zwischen dem Versatz des dritten digitalen Zustands (SCurRx) und der Phase des ersten digitalen Zustands (SCalRx); und
- Bestimmen des ersten Zeitversatzes (ΔtRx) durch Rundung der ersten Zeitdifferenz auf eine ganzzahlige Anzahl von Referenztaktperioden;
und wobei das Vergleichen des vierten digitalen Zustands (SCurTx) mit dem zweiten digitalen Zustand (SCalTx) in Bezug auf die Testfunkfrequenz umfasst:
- Berechnen einer zweiten Zeitdifferenz zwischen der Verzögerung des vierten digitalen Zustands (SCurTx) und der Verzögerung des zweiten digitalen Zustands (SCalTx); und
- Bestimmen des zweiten Zeitversatzes (ΔtTx) durch Runden der zweiten Zeitdifferenz auf eine ganzzahlige Anzahl von Referenztaktperioden.

6. Verfahren nach Anspruch 5, wobei Vergleichen des dritten digitalen Zustands (SCurRx) mit dem ersten digitalen Zustand (SCalRx) relativ zu der Testfunkfrequenz umfasst:
- Berechnen einer ersten Phasendifferenz zwischen der Phase des dritten digitalen Zustands (SCurRx) und der Phase des ersten digitalen Zustands (SCalRx);
- Berechnen der ersten Phasenverschiebung (ΔφRx) durch Subtraktion der durch den ersten Zeitversatz (ΔtRx) bei der Testfunkfrequenz verursachten Phasenverschiebung von der ersten Phasendifferenz;
und wobei das Vergleichen des vierten digitalen Zustands (SCurTx) mit dem zweiten digitalen Zustand (SCalTx) relativ zu der Testfunkfrequenz umfasst:
- Berechnen einer zweiten Phasendifferenz zwischen der Phase des vierten digitalen Zustands (SCurTx) und der Phase des ersten digitalen Zustands (SCalTx);
- Berechnen der zweiten Phasenverschiebung (ΔφTx) durch Subtraktion der durch den zweiten Zeitversatz (ΔtTx) bei der Testfunkfrequenz verursachten Phasenverschiebung von der zweiten Phasendifferenz.

7. Verfahren nach einem der Ansprüche 1 bis 6, wobei die einzelne Testfunkfrequenz aus denjenigen Funkfrequenzen der Vielzahl von Funkfrequenzen ausgewählt wird, die nicht durch externe Systeme gestört werden.

8. Digitale Gruppenantenne, insbesondere für ein digitales Gruppen-Radar, umfassend eine Vielzahl von Strahlungselementen (2), eine entsprechende Vielzahl von Sende-/Empfangsmodulen (3), die für den Betrieb bei einer Vielzahl von Funkfrequenzen ausgelegt sind, ein digitales Modul zur Signalerzeugung und -umwandlung (4) zur Erzeugung von Basisbandsignalen und deren Umwandlung zu und von Funkfrequenzen, eine Kalibrierungsantenne (18), die mit einem entsprechenden Sendemodul (19) versehen ist, einen Prozessor (5), der einen nichtflüchtigen Speicher (6) umfasst und ausgelegt ist, um das digitale Modul zur Signalerzeugung und -umwandlung (4) und das Sendemodul (19) der Kalibrierungsantenne (18) zu steuern, und einen Referenztaktgenerator (7), der einen Referenztakt an den Prozessor (5), das digitale Modul zur Signalerzeugung und - umwandlung (4) und die Sende-/Empfangsmodule (3) liefert; wobei die Sende-/Empfangsmodule (3) einen Sendeast (10) und einen Empfangsast (11) umfassen, die beide zwischen dem relativen Strahlungselement (2) und dem digitalen Modul zur Signalerzeugung und -umwandlung (4) verbunden sind, wobei der Sendeast (10) in Richtung des relativen Strahlungselements (2) einen Digital-zu-Analog-Wandler (12) und einen ersten Verstärker (13) in Kaskade umfasst, und der Empfangsast (11) in Kaskade vom relativen Strahlungselement (2) einen zweiten Verstärker (14) und einen Analog-zu-Digital-Wandler (15) umfasst; der Prozessor (5) konfiguriert ist, um das Verfahren nach einem der Ansprüche 1 bis 7 zu implementieren.

## Revendications

1. Procédé de récupération de l'erreur numérique d'une antenne réseau numérique, en particulier pour un radar à réseau numérique, après mise hors voltage et mise sous voltage de l'antenne réseau numérique, l'antenne réseau numérique (1) comprenant une pluralité d'éléments rayonnants (2), une pluralité correspondante de modules d'émission/réception (3) adaptés pour fonctionner à une pluralité de radiofréquences, un module numérique de génération et de conversion de signaux (4) pour générer des signaux de bande de base ou de bande intermédiaire et les convertir vers la radiofréquence et depuis la radiofréquence, un processeur (5) comprenant une mémoire non volatile (6) et adapté pour commander le module numérique de génération et de conversion de signaux (4), et un générateur d'horloge de référence (7) pour fournir une horloge de référence au processeur (5), au module de génération et de conversion de signaux (4) et aux modules d'émission/réception (3), chaque module d'émission/réception (3) comprenant une branche d'émission (10) et une branche de réception (11), lesquelles sont toutes deux connectées entre l'élément rayonnant (2) relatif et le module numérique de génération et de conversion de signaux (4), la branche d'émission (10) comprenant en cascade vers l'élément rayonnant (2) relatif un convertisseur numérique-analogique (12) et un premier amplificateur (13), et la branche de réception (11) comprenant en cascade depuis l'élément rayonnant (2) relatif un deuxième amplificateur (14) et un convertisseur analogique-numérique (15) ; le procédé comprenant :
- immédiatement après un étalonnage de l'antenne réseau numérique (1), pour chaque radiofréquence de la pluralité de radiofréquences et pour chaque élément rayonnant (2), l'acquisition d'un premier état numérique (SCalRx) relatif à ladite radiofréquence en réception et d'un deuxième état numérique (SCalTx) relatif à ladite radiofréquence en émission, lesdits premier et deuxième états numériques (SCalRx, SCalTx) comprenant chacun un retard et une phase, par rapport à l'horloge de référence, associés à l'élément rayonnant (2) ;
- l'enregistrement desdits premier et deuxième états numériques (SCalRx, SCalTx) dans la mémoire non volatile (6), le procédé étant **caractérisé par** :
- après toute mise hors voltage et mise sous voltage de l'antenne réseau numérique (1) se produisant après son étalonnage, pour une unique radiofréquence d'essai sélectionnée parmi la pluralité de radiofréquences et pour chaque élément rayonnant (2), l'acquisition d'un troisième état numérique (SCurRx) relatif à l'unique radiofréquence d'essai en réception et d'un quatrième état numérique (SCurTx) relatif à l'unique radiofréquence d'essai en émission, lesdits troisième et quatrième états numériques (SCurRx, SCurTx) comprenant chacun un retard et une phase, par rapport à l'horloge de référence, associés à l'élément rayonnant (2) ;
- pour chaque élément rayonnant (2), la comparaison du troisième état numérique (SCurRx) avec le premier état numérique (SCalRx) relatif à l'unique radiofréquence d'essai afin de déterminer un premier décalage temporel (ΔtRx) et un premier déphasage (ΔφRx), et la comparaison du quatrième état numérique (SCurTx) avec le deuxième état numérique (SCalTx) relatif à l'unique radiofréquence d'essai afin de déterminer un deuxième décalage temporel (ΔtTx) et un deuxième déphasage (ΔφTx) ; et
- la configuration du module numérique de génération et de conversion de signaux (4) de sorte que ce dernier applique, à chaque module d'émission/réception (3), le premier décalage temporel (ΔtRx) relatif et le premier déphasage (ΔφRx) relatif en réception, et le deuxième décalage temporel (ΔtTx) relatif et le deuxième déphasage (ΔφTx) relatif en émission ;
à la fois l'acquisition des premiers états numériques (SCalRx) et l'acquisition des troisièmes états numériques (SCurRx) comprenant, pour chaque radiofréquence de la pluralité de radiofréquences lors de l'acquisition des premiers états numériques (SCalRx) et pour l'unique radiofréquence d'essai lors de l'acquisition des deuxièmes états numériques (SCurRx) :
- l'émission d'un signal radio, correspondant à une transposition à la radiofréquence utilisée d'un premier signal (s(t)) consistant en une impulsion chirp, au moyen d'une antenne d'étalonnage (18), qui comprend un module d'émission (19) respectif commandé par le processeur (5) et qui est agencée devant les éléments rayonnants (2) ;
- la réception du premier signal (s(t)) via chaque module d'émission/réception (3) et le module numérique de génération et de conversion de signaux (4) ;
- pour chaque élément rayonnant (2), l'obtention d'un deuxième signal numérique (u(t)) par réalisation d'un dérampage numérique du premier signal (s(t)) reçu et la détermination du retard et de la phase associés à l'élément rayonnant (2) sur la base d'un traitement numérique du deuxième signal numérique (u(t)) ;
à la fois l'acquisition des deuxièmes états numériques (SCalTx) et l'acquisition des quatrièmes états numériques (SCurTx) comprenant, pour chaque radiofréquence de la pluralité de radiofréquences lors de l'acquisition des deuxièmes états numériques (SCalTx) et pour l'unique radiofréquence d'essai lors de l'acquisition des quatrièmes états numériques (SCurTx) :
- dans chaque module d'émission/réception (3), l'émission d'un signal radio, qui correspond à une transposition à la radiofréquence utilisée d'un premier signal (s(t)) consistant en une impulsion chirp, depuis le convertisseur numérique-analogique (12) directement vers le convertisseur analogique-numérique (15) de sorte que le premier signal s(t) soit directement reçu via le module d'émission/réception (3) et le module numérique de génération et de conversion de signaux (4) ; et
- pour chaque élément rayonnant (2), l'obtention d'un deuxième signal numérique (u(t)) par réalisation d'un dérampage numérique du premier signal (s(t)) reçu et la détermination du retard et de la phase associés à l'élément rayonnant (2) sur la base d'un traitement numérique du deuxième signal numérique (u(t)).

2. Procédé selon la revendication 1, dans lequel l'acquisition des quatrièmes états numériques (SCurTx) est effectuée après la comparaison entre les troisièmes états numériques (ScurRx) et les premiers états numériques (ScalRx) relatifs à la radiofréquence d'essai afin de déterminer le premier décalage temporel et le premier déphasage pour chaque élément rayonnant (2), et l'émission du premier signal (s(t)) est mise en œuvre après avoir configuré le module numérique de génération et de conversion de signaux (4) de sorte que ce dernier applique le premier décalage temporel (ΔtRx) relatif et le premier déphasage (ΔφRx) relatif en réception à chaque module d'émission/réception (3).

3. Procédé selon la revendication 1, dans lequel la réalisation d'un dérampage numérique du premier signal (s(t)) reçu comprend :
- la multiplication numérique du premier signal (s(t)) reçu par un troisième signal (d(t)) consistant en une copie conjuguée complexe du premier signal (s(t)) avec un retard et une phase connus, de façon à obtenir, en tant que deuxième signal (u(t)), un signal pouvant être approximé à une sinusoïde.

4. Procédé selon la revendication 3, dans lequel la détermination du retard et de la phase associés à l'élément rayonnant (2) comprend :
- l'obtention d'un quatrième signal numérique (φ(t)) comme l'arcsinus du deuxième signal (u(t)) ;
- l'estimation de la pente et de la valeur initiale du quatrième signal (φ(t)) par régression linéaire ;
- le calcul du retard associé à l'élément rayonnant (2) en fonction de la pente ; et
- le calcul de la phase associée à l'élément rayonnant (2) en fonction de la valeur initiale.

5. Procédé selon l'une quelconque des revendications 1 à 4, dans lequel la comparaison du troisième état numérique (SCurRx) avec le premier état numérique (SCalRx) relatif à la radiofréquence d'essai comprend :
- le calcul d'une première différence temporelle entre le retard du troisième état numérique (SCurRx) et le retard du premier état numérique (SCalRx) ; et
- la détermination du premier décalage temporel (ΔtRx) par arrondi de la première différence temporelle à un nombre entier de périodes d'horloge de référence ; et la comparaison du quatrième état numérique (SCurTx) avec le deuxième état numérique (SCalTx) relatif à la radiofréquence d'essai comprend :
- le calcul d'une deuxième différence temporelle entre le retard du quatrième état numérique (SCurTx) et le retard du deuxième état numérique (SCalTx) ; et
- la détermination du deuxième décalage temporel (ΔtTx) par arrondi de la deuxième différence temporelle à un nombre entier de périodes d'horloge de référence.

6. Procédé selon la revendication 5, dans lequel la comparaison du troisième état numérique (SCurRx) avec le premier état numérique (SCalRx) relatif à la radiofréquence d'essai comprend :
- le calcul d'une première différence de phase entre la phase du troisième état numérique (SCurRx) et la phase du premier état numérique (SCalRx) ;
- le calcul du premier déphasage (ΔφRx) par soustraction, de la première différence de phase, du déphasage introduit par le premier décalage temporel (ΔtRx) à la radiofréquence d'essai ;
et la comparaison du quatrième état numérique (SCurTx) avec le deuxième état numérique (SCalTx) relatif à la radiofréquence d'essai comprend :
- le calcul d'une deuxième différence de phase entre la phase du quatrième état numérique (SCurTx) et la phase du deuxième état numérique (SCalTx) ;
- le calcul du deuxième déphasage (ΔφTx) par soustraction, de la deuxième différence de phase, du déphasage introduit par le deuxième décalage temporel (ΔtTx) à la radiofréquence d'essai.

7. Procédé selon l'une quelconque des revendications 1 à 6, dans lequel ladite unique radiofréquence d'essai est sélectionnée parmi les radiofréquences de la pluralité de radiofréquences qui ne sont pas perturbées par des systèmes externes.

8. Antenne réseau numérique, en particulier pour un radar à réseau numérique, comprenant une pluralité d'éléments rayonnants (2), une pluralité correspondante de modules d'émission/réception (3) adaptés pour fonctionner à une pluralité de radiofréquences, un module numérique de génération et de conversion de signaux (4) pour générer des signaux de bande de base et les convertir vers la radiofréquence et depuis la radiofréquence, une antenne d'étalonnage (18) munie d'un module d'émission (19) respectif, un processeur (5), qui comprend une mémoire non volatile (6) et qui est adapté pour commander le module numérique de génération et de conversion de signaux (4) et le module d'émission (19) de l'antenne d'étalonnage (18), et un générateur d'horloge de référence (7) qui fournit une horloge de référence au processeur (5), au module de génération et de conversion de signaux (4) et aux modules d'émission/réception (3) ; les modules d'émission/réception (3) comprenant une branche d'émission (10) et une branche de réception (11), lesquelles sont toutes deux connectées entre l'élément rayonnant (2) relatif et le module numérique de génération et de conversion de signaux (4), la branche d'émission (10) comprenant en cascade vers l'élément rayonnant (2) relatif un convertisseur numérique-analogique (12) et un premier amplificateur (13), et la branche de réception (11) comprenant en cascade depuis l'élément rayonnant (2) relatif un deuxième amplificateur (14) et un convertisseur analogique-numérique (15) ; le processeur (5) étant configuré pour mettre en œuvre le procédé selon l'une quelconque des revendications 1 à 7.
